# EUROPÄISCHE PATENTSCHRIFT

(11) **EP 2 376 972 B1**
(45) Veröffentlichungstag und Bekanntmachung des Hinweises auf die Patenterteilung: **07.10.2015**
(21) Anmeldenummer: 10708886.6
(22) Anmeldetag: 02.01.2010
(51) Int. Cl.: G02B 5/04, G02B 17/04, G02B 23/02, G02B 23/04

(54) **PARALLELSICHTIGES, BILDUMKEHRENDES PRISMENSYSTEM**
PARALLEL-SIGHTED, IMAGE-REVERSING PRISM SYSTEM
SYSTÈME DE PRISMES À VISION PARALLÈLE, RENVERSANT L'IMAGE

(30) Priorität: 13.01.2009 DE 102009004797; 28.11.2009 DE 102009056208
(43) Veröffentlichungstag der Anmeldung: 19.10.2011
(73) Patentinhaber: Leica Camera AG, 35606 Solms (DE)
(72) Erfinder: KAMMANS, Sigrun, 35745 Herborn (DE); ARENS, Winfried, 35392 Gießen (DE)
(74) Vertreter: Stamer, Harald
(86) Internationale Anmeldenummer: PCT/DE2010/000006
(87) Internationale Veröffentlichungsnummer: WO 2010/081461

(56) Entgegenhaltungen:
- DE-C1- 19 933 172
- US-A1- 2005 200 965
- US-A1- 2006 028 620
- US-A1- 2008 192 245

## Beschreibung

Die Erfindung betrifft ein Prismensystem gemäß dem Oberbegriff des Patentanspruchs 1.

Ein solches Prismensystem ist beispielsweise aus DE-PS 518 143 bekannt und wird dort als parallelsichtiges Umkehrprismensystem bezeichnet, um zum Ausdruck zu bringen, dass die in Geradeausrichtung in das Prismensystem eintretenden und aus diesem austretenden optischen Achsen der Abbildungsstrahlenbündel parallel zueinander versetzt sein können. Eine andere Bezeichnung kann die Angabe geradsichtig sein.

Das bekannte Prismensystem weist nur zwei an Luft grenzende, zueinander parallele Strahlendurchtrittsflächen und sechs Spiegelflächen auf, die so angeordnet sind, dass sämtliche Spiegelungen in einer Ebene erfolgen und sämtlich totalreflektierend sind. Die Abbildungsstrahlen treten in die Basisfläche eines Dachkantprismas ein und an einer dazu parallelen Basisfläche eines Reflexionsprismas aus. Solche Prismensysteme werden üblicherweise in afokale optische Abbildungssysteme, wie z.B. bei Fernrohren eingesetzt.

DE 199 33 172 C1 beschreibt ein Prismensystem zur Bildumkehr in einem visuellen Beobachtungsstrahlengang, das aus einem Dachkantprisma mit zur Basisfläche geneigter Dachkante und einer zur Basisfläche schräg gestellten Giebelfläche besteht, an die ein Reflexionsprisma angefügt ist, wobei dieses Reflexionsprisma eine zur Basisfläche des Dachkantprismas parallele Strahlendurchtrittsfläche aufweist, wobei die Giebelfläche des Dachkantprismas als Strahlenteiler ausgebildet ist und die Basisfläche des Dachkantprismas und die Strahlendurchtrittsfläche des Reflexionsprismas geometrisch voneinander getrennte Bereiche zum Durchtritt der Beobachtungsstrahlen und für einen weiteren Strahlengang zur Einspiegelung einer Meßwertanzeige in den ausgangsseitigen Beobachtungsstrahlengang oder eines Entfernungsmeßstrahlenganges in den eingangsseitigen Beobachtungsstrahlengang aufweisen.

Dieses bekannte System weist ausschließlich in den Basisflächen des Prismensystems Bereiche zum Einkoppeln einer sichtbaren Meßwertanzeige einerseits und eines Meßstrahlenbündels im infraroten Wellenlängenbereich andererseits auf. Die für die ein- und ausgekoppelten Strahlengänge benutzten Flächen entsprechen einer geringen Apertur, so dass nur ein kleiner Bereich des Sehfeldes aus- bzw. eingekoppelt wird. Es ist ausgeschlossen, mit einer solchen Apertur einen für eine Bildaufnahme geeigneten Strahlengang auszukoppeln oder eine Bildaufnahme des gesamten Bildfeldes zu bewirken.

In einer Ausführungsform der beiden bekannten Prismensysteme sind das Dachkantprisma und das Reflexionsprisma an der Giebelfläche des Dachkantprismas derart zusammengefügt, dass die Dachkante des Dachkantprismas und ein außerhalb des Fügebereichs liegender Bereich der Fläche des Reflexionsprismas einen dreieckförmigen offenen Raum bilden. Der außerhalb des Fügebereichs liegende Bereich der Fläche des Reflexionsprismas ist üblicherweise voll verspiegelt, um die an der Basisfläche des Reflexionsprismas ein- oder austretenden Abbildungsstrahlen vollständig innerhalb des Prismas weiterzuleiten. Auf die Verspiegelung kann verzichtet werden, wenn die Neigung dieser Fläche so gewählt werden kann, dass sie für die an der Basisfläche ein- oder austretenden Abbildungsstrahlen in Totalreflexion genutzt werden kann.

Das Zusammenfügen der beiden Prismen kann vorzugsweise durch Kitten, Ansprengen oder Halten in einem Prismenstuhl erfolgen, wobei zwischen den Fügeflächen auch ein geringer Luftspalt vorhanden sein kann.

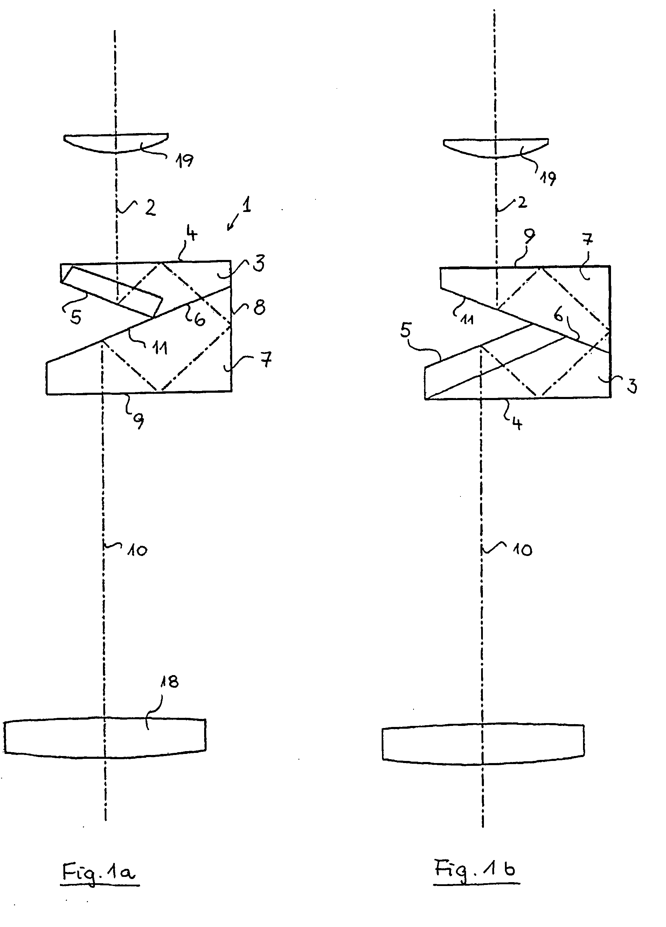

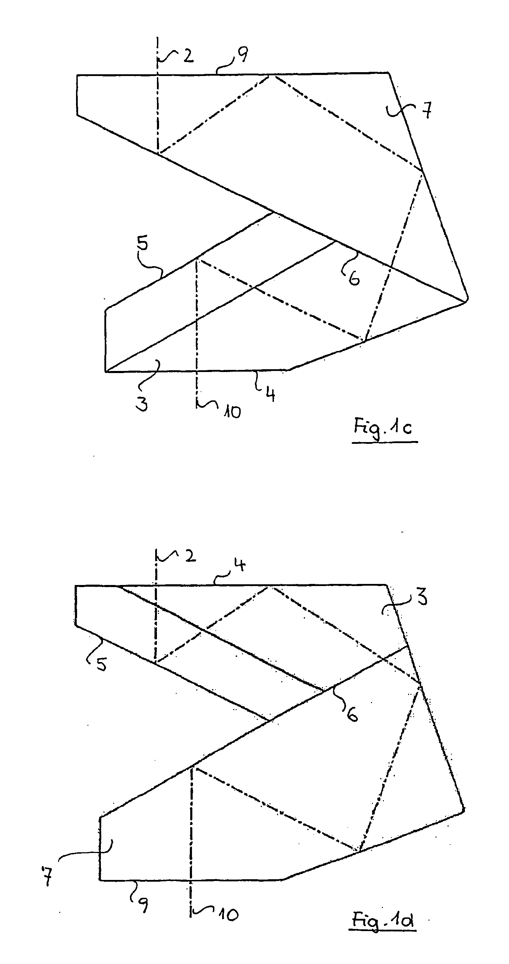

Der grundsätzliche Aufbau der bekannten Prismensysteme ist in den Figuren 1 a, b, c dargestellt. In Fig. 1 a ist die Basisfläche des Reflexionsprismas dem objektivseitigen Abbildungsstrahlengang zugeordnet und die Basisfläche des Dachkantprismas dem okularseitigen Abbildungsstrahlengang. In Fig. 1 b ist die Lage der beiden Prismen im Abbildungsstrahlengang vertauscht. Fig. 1 c zeigt eine andere Form des Dachkantprismas und des Reflexionsprismas mit mehreren zueinander geneigten Reflexionsflächen. Den bekannten Prismensystemen gemeinsam ist, dass sie an der Giebelfläche des Dachkantprismas miteinander verkittet sind. Diese Kittfläche des Dachkantprismas bei den Prismensystemen nach Fig. 1 a, b kann als Strahlenteiler ausgebildet sein. Die dieser Kittfläche gegenüber liegenden Bereiche der Basisflächen können zum Einkoppeln eines weiteren Strahlenganges in den objektivseitigen oder okularseitigen Abbildungsstrahlengang genutzt werden. Die dafür nutzbaren Aperturbereiche sind gering.

Der Erfindung lag daher die Aufgabe zugrunde, eine Möglichkeit der Einspiegelung zusätzlicher Strahlengänge zu schaffen, die vorzugsweise eine große Apertur aufweisen können, wobei das Gesamtsystem kompakt bleibt und die bekannten Zusatzfunktionen beibehalten werden können.

Eine weitere Aufgabe der Erfindung lag darin, ein großes Sehfeld bei der Auskopplung eines zusätzlichen Strahlenganges zu erfassen und dabei die Abbildungsqualität des primären Beobachtungsstrahlenganges nicht oder nur gering zu beeinflussen. Die Erfindung soll sich mit einem geringen Bauteileaufwand realisieren lassen und eine Bildaufnahme des beobachteten Sehfeldes ermöglichen.

Diese Aufgabe wird bei einem Prismensystem der eingangs genannten Art erfindungsgemäß durch die kennzeichnenden Merkmale des Patentanspruchs 1 gelöst. Vorteilhafte Weiterbildungen sind Gegenstand der weiteren Patentansprüche.

Der Erfindung liegt die Erkenntnis zugrunde, den außerhalb des Fügebereichs liegenden Bereich des Reflexionsprismas in vielfältiger Weise zusätzlich zur Ein- oder Auskopplung eines weiteren Strahlenganges nutzen zu können, wobei in den vorhandeneh offenen Bereich des Prismensystems in platzsparender Weise optische Umlenk- und/oder Abbildungsmittel eingesetzt werden können.

Ein Fernglas mit dem erfindungsgemäßen Prismensystem ist besonders vorteilhaft zur optischen Kommunikation geeignet. Bei der optischen Kommunikation müssen z.B. zwei Ferngläser mit je einer optischen Datenempfangseinrichtung und einer Datensendeeinrichtung ausgestattet sein, die in den beiden Fernrohrtuben untergebracht sein können. Werden die erfindungsgemäßen Prismensysteme verwendet, lassen sich aufgrund der großen nutzbaren Apertur und des großen Sehfeldes hohe Leistungen an infrarotem Licht von einem Fernglas zum anderen übertragen und empfangen. Bei bekannten Systemen ist eine solche Kommunikation oftmals nicht möglich, da die zur Datenübertragung erforderlichen Lichtleistungen nur mit Hilfe einer starken Strahlbündelung oder einer Aus- und Einkopplung der Empfangs- bzw. Sendestrahlen am Okular erzielt werden können. Bei der Strahlbündelung müssen die Sendestrahlen des einen Fernglases exakt auf das Sehfeld der Empfangsoptik des anderen Fernglases gerichtet sein, was einen erhöhten Aufwand bei der Zielausrichtung bedeutet und störanfällig ist. Gebündelte Strahlen stellen außerdem ein Problem bei der Augensicherheit dar.

Aufgrund der erfindungsgemäß großen nutzbaren Apertur und des großen Sehfeldes eignet sich ein binokulares Fernglas oder monokulares Fernrohr (Teleskop) beim Einsatz des Prismensystems auch zur gleichzeitigen Abbildung des gesamten beobachteten Sehfeldes auf einen Bildaufnahmesensor oder auf einem Display am Fernglas.

Die Erfindung wird nachfolgend anhand einer Zeichnung näher erläutert, wobei die Figuren schematisch beispielhafte Ausführungsformen darstellen. Dabei zeigen
- Fig.1a,b,c,d: bekannte Prismensysteme,
- Fig.2: ein objektivseitig eingesetztes Umlenksystem,
- Fig.3: ein okularseitig eingesetztes Umlenksystem,
- Fig.4-8: verschiedene Formen von in den offenen Raum eingesetzten Umlenksystemen,
- Fig.9: die Auskopplung über ein diffraktives optisches Element (DOE),
- Fig.10: ein System zur Einkopplung eines weiteren Strahlenganges in den im Prismensystem reflektierten Strahlengang und
- Fig.11: ein System zur Einkopplung eines weiteren Strahlenganges in das Okular.

In Fig. 1 ist ein Teleskop mit einem Objektiv 18 und einem Okular 19 dargestellt. Das Teleskop enthält ein geradsichtiges / parallelsichtiges Prismensystem 1 zur Bildumkehr eines visuellen

Beobachtungsstrahlenganges 2. Ein objektivseitiger Strahl 10 wird durch das Objektiv 18 dem System zugeführt. Der objektivseitige Strahl 10 tritt senkrecht durch eine Basisfläche 9 eines rechtwinkligen Reflexionsprismas 7 in das Reflexionsprisma 7 ein. Die Basisfläche 9 kann zur optimalen Transmission des Spektralbereichs des eintretenden Strahlenganges 10 mit einer optimierten Transmissions-Schicht versehen sein. Der objektivseitige Strahl 10 trifft nach Eintritt in das Reflexionsprisma 7 auf eine zur Basisfläche 9 schräg gestellte Reflexionsfläche 11. Diese ist in den bekannten Systemen verspiegelt.

Der auf diese Weise an dem Flächenbereich 11 reflektierte objektivseitige Strahl 10 wird unter einem Winkel der Totalreflexion an der Basisfläche 9 und einer zur Basisfläche 9 senkrecht stehenden Reflexionsfläche 8 totalreflektiert und durchtritt im Flächenbereich 6 die Kittfläche, mit der die Giebelfläche 6 des Dachkantprismas 3 auf das Reflexionsprisma 7 aufgekittet ist. Der auf diese Weise in das Dachkantprisma 3 eintretende Strahl 10 wird unter einem Winkel der Totalreflexion an der Basisfläche 4 des Dachkantprismas 3 reflektiert. Nach der Totalreflexion an der Basisfläche 4 trifft der Strahl 10 auf die Dachkante 5. Der Winkel der Dachkante 5 zur Basisfläche 4 ist so gewählt, dass der Strahl 10 senkrecht auf die Basisfläche 4 trifft und anschließend als Beobachtungsstrahl 2 dem Okular 19 zugeführt wird. Die Dachkante 5 kann vorteilhaft mit einer Phasenkorrekturschicht vergütet sein, damit kein Phasensprung der an der Dachkante reflektierten Pupillenhälften sichtbar wird. Die Basisfläche 4 kann zur weiteren Verbesserung der Transmission beim Austritt des Beobachtungsstrahls 2 mit einer für das Spektrum des Beobachtungsstrahls 2 optimierten Transmissionsschicht vergütet sein.

Bei der Anordnung nach Fig.1 b ist das Prismensystem 1 so angeordnet, dass der objektivseitige Strahl 10 zunächst auf die Dachkante 5 trifft. Im übrigen ist der Strahlenverlauf wie in Fig. 1a beschrieben, weshalb die Bezugszeichen in derselben Weise verwendet werden wie in Fig. 1a.

Das Prismensystem nach Fig. 1c unterscheidet sich von dem vorhergehenden nach Fig. 1b lediglich dadurch, dass der objektivseitig eintretende Strahl 10 nach Reflexion an der Dachkante 5 an einer zur Basisfläche 4 schrägestellten Fläche totalreflektiert wird, bevor er durch die als Kittfläche dienende Giebelfläche 6 des Dachkantprismas 3 in das Reflexionsprisma 7 eintritt und nach zweimaliger Totalreflexion sowie einer Spiegelung als Beobachtungsstrahl 2 austritt. Auch dieses Prismensystem kann in analoger Ausrichtung wie in Fig.1 a eingesetzt werden (Fig.1d).

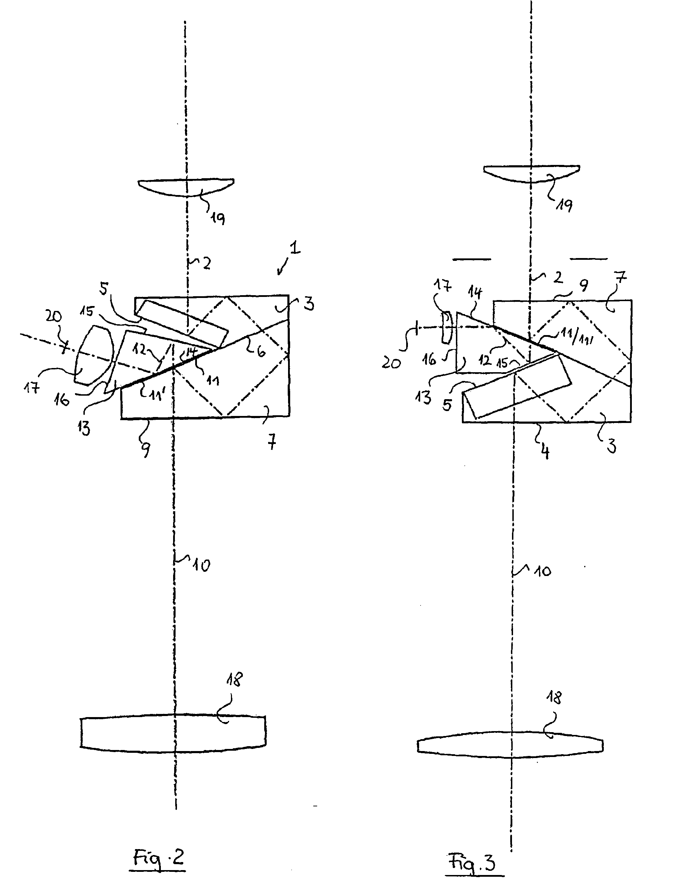

Fig. 2 zeigt ein erstes Ausführungsbeispiel der erfindungsgemäßen Weiterbildung des bekannten Prismensystems.

In den offenen Raum zwischen Dachkante 5 und Flächenbereich 11 des Reflexionsprismas 7 ist ein Dreieckprisma 13 zur Umlenkung der den Flächenbereich 11 nach seiner Ausbildung als Strahlteiler 11' durchdringenden Strahlen 12 aus dem Prismensystem 1 heraus eingefügt. Die Basisfläche 14 des Dreieckprismas 13 ist beabstandet zum Flächenbereich 11, 11' angeordnet. Für eine optimierte Einkopplung des weiteren Strahlengangs 12 in die Basisfläche 14 des Dreieckprismas 13 kann die Basisfläche 14 zusätzlich mit einer die Transmission verbessernden Filterschicht vergütet sein. Der Flächenbereich 11 ist zur Auskopplung des weiteren Strahlengangs 12 erfindungsgemäß als Strahlenteiler 11' mit einer für den Spektralbereich des weiteren Strahlengangs 12 transmittierenden Beschichtung ausgebildet. Die Beschichtung wirkt für den Strahl 10 reflektierend. Nachdem der weitere Strahlengang 12 in die Basisfläche 14 des Dreieckprismas 13 eingekoppelt ist, wird er an einer verspiegelten Dachfläche 15 reflektiert. Der Winkel zwischen der Dachfläche 15 und der Basisfläche 14 des Dreieckprismas 13 ist so gewählt, dass der Strahlengang 12 von der Dachfläche 15 auf die Basisfläche 14 des Dreieckprismas 13 auftrifft und anschließend unter dem Grenzwinkel der Totalreflexion an der Basisfläche 14 in Richtung der zweiten Dachfläche 16 reflektiert wird. Wegen der notwendigen Reflexion an der Basisfläche 14 darf diese nicht im Kontakt mit der Strahlenteilerfläche 11' stehen. Die Winkel der Dachflächen 15, 16 sind so gewählt, dass der weitere Strahlengang 12 vorzugsweise senkrecht aus der Dachfläche 16 austritt und einem Linsensystem 17 zugeführt wird. In der Abbildungsebene des Linsensystems 17 ist ein Infrarotempfänger 20 angeordnet.

Da der optische Strahlengang für gleiche Wellenlängen auch umkehrbar ist, kann selbstverständlich auch anstelle des Infrarotempfängers 20 ein nicht weiter dargestellter Infrarotsender in der Abbildungsebene des Linsensystems 17 angeordnet sein. Der von einem Infrarotsender 20 emittierte Strahlengang 12 tritt dann in ein auf den Spektralbereich des Infrarotsenders 20 zur Abbildung optimiertes Linsensystem 17 ein, um nach Verlassen des Linsensystems 17 an der Dachfläche 16 des Dreieckprismas 13 vorzugsweise senkrecht in dieses einzutreten. Die Dachfläche 16 kann zur optimalen Transmission eine auf die Wellenlänge des Infrarotempfängers 20 oder -senders optimierte optische Filterbeschichtung aufweisen. Die zusätzliche Filterschicht auf einer der Prismen- oder Abbildungsflächen für den IR-Bereich dient sowohl der Augensicherheit als auch einer Rauschunterdrückung bei einer Signalübertragung über das IR-Strahlenbündel.

Bei entsprechender Anpassung des Linsensystems 17 ist es ebenfalls möglich, in vorteilhafter Weise einen CCD oder CMOS Bildaufnahmesensor in der Abbildungsebene des Linsensystems 17 anzuordnen. Lichtsender, Lichtempfänger, CCD oder CMOS Bildaufnahmesensor können in vorteilhafter Weise zur einfachen Justage des Gesamtsystems auf das Linsensystem 17 aufgekittet sein. Zur Bildaufnahme ist es zweckmäßig, den Strahlenteiler 11' als Neutralteiler mit z.B. einer Reflexion von 70 % und einer Transmission von 30 % der Intensität des eintretenden Strahls 10 auszubilden.

Fig. 3 zeigt ein weiters Ausführungsbeispiel, bei dem ein Dreieckprisma 13 beabstandet zur Reflexions- und Strahlenteilerfläche 11, 11' des okularseitig angeordneten Reflexionsprismas 7 vorgesehen ist. In diesem Fall ist es möglich, eine Anzeige auf einem Display 20 als weiteren Strahlengang 12 in den okularseitigen Beobachtungsstrahlengang 2 einzukoppeln. Der Strahlenteiler 11' ist an den Spektralbereich der Displaydarstellung in Transmission und an den Spektralbereich der Beobachtungsstrahlen 2 in Reflexion angepasst. Ein an zwei verschiedene Spektralbereiche angepasster Strahlenteiler wird üblicherweise als dichroitisch bezeichnet.

Auch in diesem Ausführungsbeispiel ist ein geringer Luftspalt zwischen der Basisfläche 14 des Dreieckprismas 13 und der Strahlenteilerfläche 11' erforderlich, da die Basisfläche 14 sowohl in Totalreflexion als auch in Transmission für den eingekoppelten weiteren Strahlengang 12 genutzt wird. Ein Kontakt mit der Strahlenteilerfläche 11' würde die Totalreflexion an dieser Stelle stören und zu einem vorzeitigen Übergang des weiteren Strahlenganges 12 in das Reflexionsprisma 7 zur Folge haben.

Selbstverständlich ist es auch möglich, eine breitbandige Display-Darstellung in den okularseitigen Beobachtungsstrahlengang einzukoppeln. Dazu kann der Strahlenteiler 11' als Neutralteiler mit einem passenden Reflexions-/Transmissions-Verhältnis ausgebildet sein. Dabei kann in den Strahl 10 eine mechanisch betätigbare Blende eingefügt sein, die eine abwechselnde Beobachtung der ebenfalls schaltbaren Displayanzeige und des realen Sehfeldes ermöglicht.

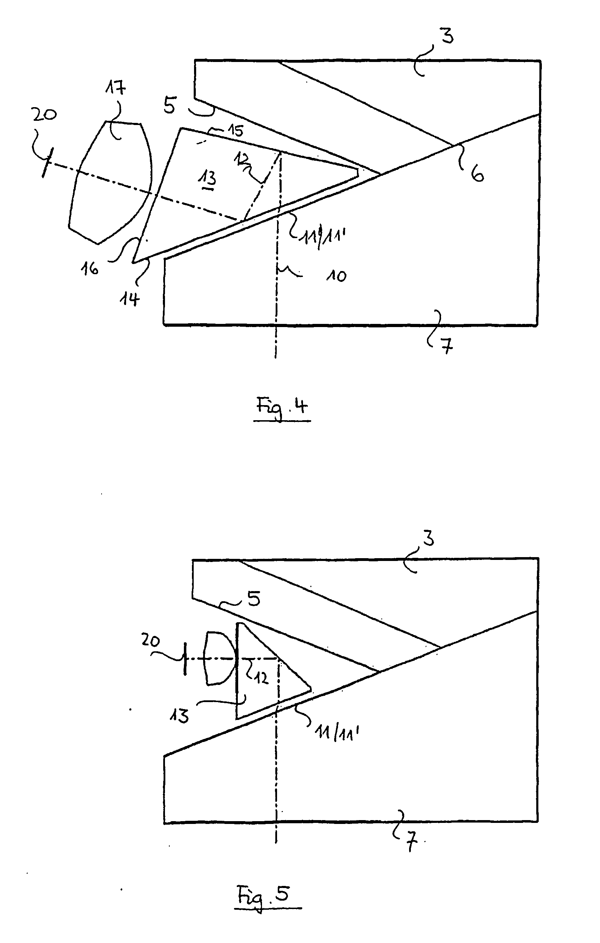

In den weiteren Figuren 4 bis 8 sind im Detail Anordnungen verschiedener Umlenksysteme in dem offenen Bereich des Prismensystems 1 zwischen der nicht verkitteten Giebelfläche des Reflexionsprismas 7 und der Dachkante 5 des Dachkantprismas 3 dargestellt, wobei die Umlenksysteme nicht mit der Reflexions-/Strahlteilerfläche 11, 11' verkittet sind. Die Abbildungs-/Beobachtungsstrahlen sind nicht weiter dargestellt.

In Fig. 4 ist das Dreieckprisma 13 mit seiner Basisfläche 14 parallel und beabstandet zur Reflexions-/Strahlteilerfläche 11, 11' angeordnet, wie bereits zu Fig. 2 beschrieben. Die Basisfläche 14 ist auf diese Weise für eine Totalreflexion des ausgekoppelten bzw. einzukoppelnden weiteren Strahlenganges 12 geeignet.

Wenn die Basisfläche 14 zusätzlich mit einer die Transmission des einzukoppelnden bzw. auszukoppelnden Strahlenganges optimierenden Filterschicht versehen wird, ist es vorteilhaft, zwischen der Basisfläche 14 des Dreieckprismas 13 und dem Flächenbereich 11, 11' einen kleinen Keilwinkel vorzusehen. Auf diese Weise lassen sich ansonsten zwischen der Beschichtung auf der Reflexions-/Strahlenteilerfläche 11, 11' und der Beschichtung auf der Basisfläche 14 des Dreieckprismas 13 auftretende Interferenzen wirksam verhindern.

Fig. 5 zeigt eine Umlenkanordnung, die mit einer einzigen Reflexion im Dreieckprisma 13 auskommt. In diesem Fall kann das Dreieckprisma 13 auch mit der Strahlenteilerfläche 11' verkittet sein.

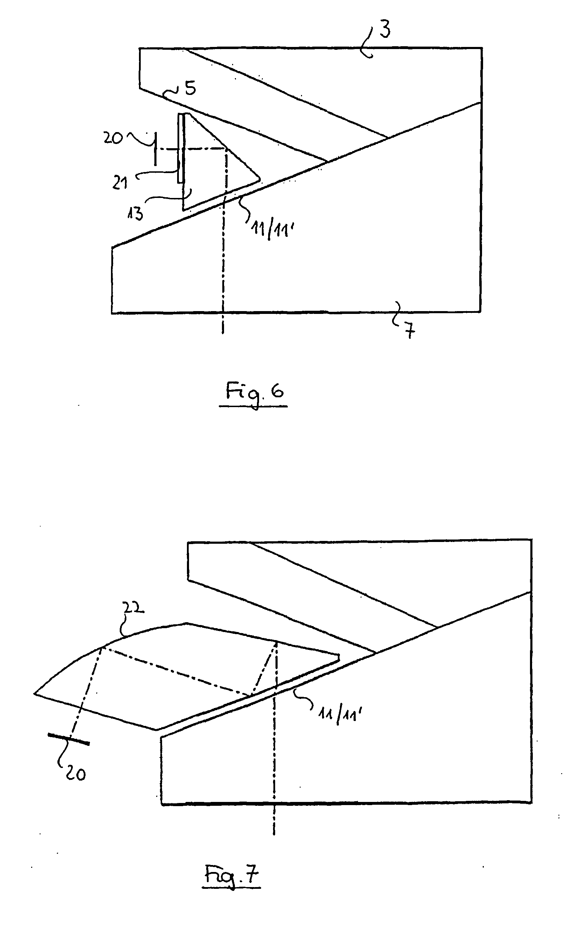

Bei dem in Fig. 6 dargestellten Umlenksystem ist anstelle einer Linsenoptik 17 auf die Strahlenaustrittsfläche des Dreieckprismas 13 ein diffraktives optisches Element 21 (DOE) oder ein GRIN-Element (Gradienten-Index-Linse) aufgekittet. Das Umlenksystem kann auf diese Weise weiter miniaturisiert und bei Bedarf auch auf die Strahlenteilerfläche 11' aufgekittet werden.

In Fig. 7 besitzt das Umlenksystem eine frei geformte Reflexionsfläche 22, die abbildende Funktion hat, so dass auf ein weiteres optisches Abbildungssystem verzichtet werden kann oder dieses als erheblich vereinfachtes System ausgebildet werden kann.

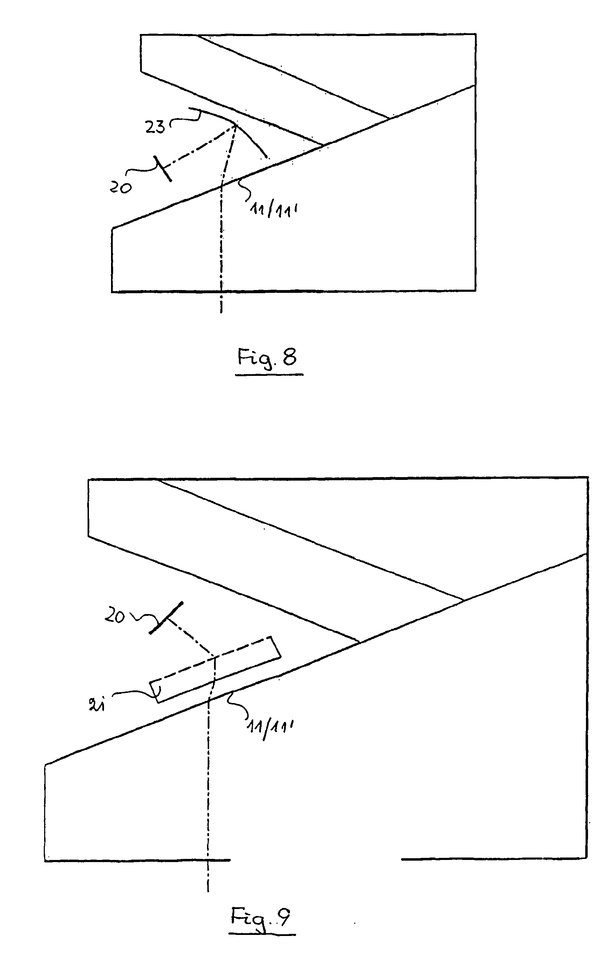

Fig. 8 zeigt ein Umlenksystem, das als frei geformte Spiegelfläche 23 ausgebildet ist. Selbstverständlich können auch mehrere solcher Spiegelflächen hintereinander zur Strahlformung und Strahlabbildung vorgesehen sein. Unter frei geformten Flächen sollen sowohl sphärisch als auch asphärisch geformte Flächen an Elementen des Umlenksystems verstanden werden. Die Flächen können innere Reflexionsflächen oder auch Strahl-Austrittsflächen sein.

Fig. 9 zeigt die Auskopplung eines weiteren Strahlenganges aus der Strahlteilerfläche 11' heraus über ein diffraktives optisches Element (DOE) oder eine GRIN-Linse 21, die auch auf die Strahlenteilerfläche 11' aufgekittet sein können.

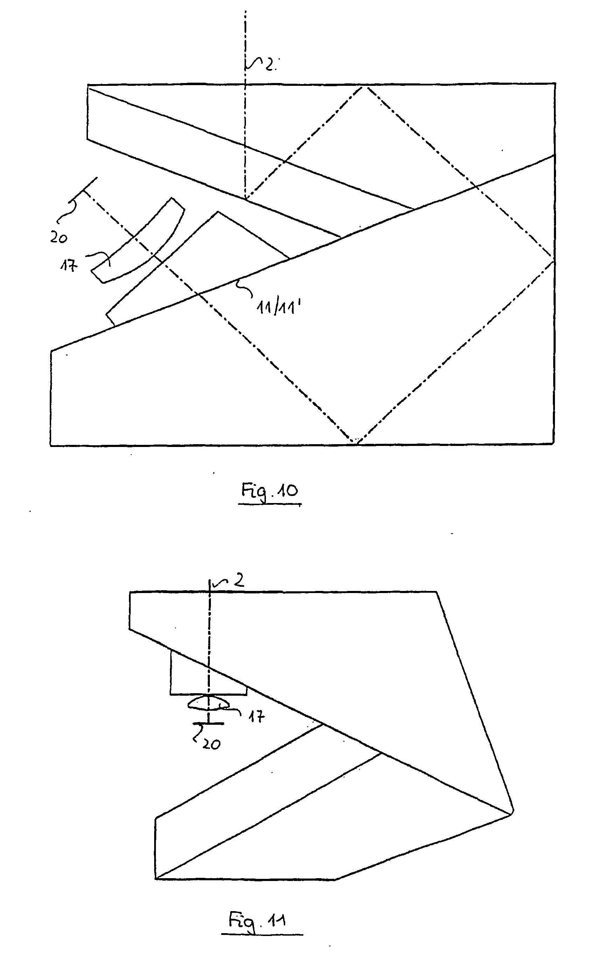

Fig. 10 zeigt eine Anordnung, mit der eine auf einem Display 20 dargestellt Anzeige über die Reflexions-/Strahlteilerfläche 11, 11' in den okularseitigen Beobachtungsstrahlengang eingekoppelt werden kann.

Fig. 11 zeigt eine weitere Anordnung, mit der eine Anzeige auf einem Display 20 direkt in den okularseitigen Beobachtungsstrahlengang eingekoppelt werden kann.

### Bezugszeichenliste

- 1: Prismensystem
- 2: Okularseitiger Beobachtungsstrahl
- 3: Dachkantprisma
- 4: Basisfläche des Dachkantprismas
- 5: Dachkante
- 6: Giebelfläche
- 7: Reflexionsprisma
- 8: Reflexionsfläche
- 9: Basisfläche des Reflexionsprismas
- 10: Objektivseitiger Strahl
- 11: Reflexionsfläche
- 11': Strahlteiler
- 12: weiterer Strahlengang
- 13: Dreieckprisma
- 14: Basisfläche Dreieckprisma
- 15,16: Dachflächen
- 17: Linsensystem
- 18: Objektiv
- 19: Okular
- 20: Infrarotempfänger, -sender, LED, Display, CCD, CMOS Bildaufnehmer
- 21: DOE oder GRIN-Linse
- 22: frei geformte Reflexionsfläche
- 23: frei geformte Spiegelfläche

## Patentansprüche

1. Parallelsichtiges, bildumkehrendes Prismensystem (1) mit zwei zueinander parallelen Basisflächen (4;9) für einen senkrechten Strahlendurchtritt, wobei eine dieser Basisflächen (4;9) einem okularseitigen Abbildungsstrahlengang und die andere dieser Basisflächen einem objektivseitigen Abbildungsstrahlengang eines Teleskops zugeordnet werden kann, und wobei das Prismensystem (1) aus zwei Reflexionsprismen (3;7) mit jeweils einer zur Basisfläche (4;9) schräg gestellten Giebelfläche (6) besteht, eines dieser Reflexionsprismen (3) eine ebenfalls zur Basisfläche (9) geneigte Dachkante (5) aufweist und die Reflexionsprismen (3;7) an den ebenen Giebelflächen (6) derart zusammengefügt sind, dass die Dachkante (5) und der außerhalb des Fügebereichs liegende Bereich der Giebelfläche (6) des anderen Reflexionsprismas (7) einen dreieckförmigen offenen Raum bilden, **dadurch gekennzeichnet, dass** die in dem offenen Raum liegende ebene Reflexionsfläche (11) eines der Reflexionsprismen (3, 7) vollflächig als breitbandig teildurchlässiger Strahlenteiler (11') ausgebildet ist.

2. Prismensystem nach Anspruch 1, **dadurch gekennzeichnet, dass** der Strahlenteiler (11') zur Ein- oder Auskopplung eines Teiles des Abbildungsstrahlenganges (10) in einem Teleskop und/oder eines zusätzlichen weiteren Strahlenganges (12) ausgebildet ist.

3. Prismensystem nach einem der vorhergehenden Ansprüche, **dadurch gekennzeichnet, dass** in den offenen Raum zwischen Dachkante (5) und Fläche des Strahlenteilers (11') als Teil des Prismensystems ein Umlenksystem zur Umlenkung der den Strahlenteiler (11') durchdringenden Strahlen aus dem Prismensystem (1) heraus oder in dieses hinein eingefügt ist.

4. Prismensystem nach Anspruch 3, **dadurch gekennzeichnet, dass** das Umlenksystem als Dreieckprisma (13) mit einer Basisfläche (14) und daran unter einem spitzen Winkel angrenzenden ersten und zweiten Dachflächen (15,16) ausgebildet ist.

5. Prismensystem nach Anspruch 4, **dadurch gekennzeichnet, dass** die Basisfläche (14) des Dreieckprismas (13) parallel und beabstandet zum Strahlenteiler (11') angeordnet ist.

6. Prismensystem nach Anspruch 4 oder 5, **dadurch gekennzeichnet, dass** die der Dachkante (5) im offenen Raum benachbarte erste Dachfläche (15) des Dreieckprismas (13) verspiegelt ist.

7. Prismensystem nach Anspruch 6, **dadurch gekennzeichnet, dass** die Neigung der verspiegelten ersten Dachfläche (15) gegenüber der Basisfläche (14) so gewählt ist, dass die die Basisfläche (14) durchdringenden und an der Dachfläche (15) reflektierten Strahlen auf die Basisfläche (14) unter dem Grenzwinkel der Totalreflexion auftreffen.

8. Prismensystem nach Anspruch 7, **dadurch gekennzeichnet, dass** die Neigung der zweiten Dachfläche (16) des Dreieckprismas (13) gegenüber der Basisfläche (14) so gewählt ist, dass die optische Achse eines an der Basisfläche (14) totalreflektierten Strahlenbündels senkrecht durch diese zweite Dachfläche (16) hindurchtritt.

9. Prismensystem nach Anspruch 8, **dadurch gekennzeichnet, dass** der zweiten Dachfläche (16) ein die austretenden Strahlenbündel abbildendes optisches System (17) als Teil des Prismensystems nachgeordnet ist.

10. Prismensystem nach Anspruch 9, **dadurch gekennzeichnet, dass** das optische System (17) ein Linsensystem ist und/oder aus GRIN-Linsen und/oder diffraktiven Elementen (DOE) besteht.

11. Prismensystem nach Anspruch 3, **dadurch gekennzeichnet, dass** das Umlenksystem aus frei geformten Spiegelflächen (23) besteht.

12. Prismensystem nach Anspruch 3, **dadurch gekennzeichnet, dass** das Umlenksystem als Prisma mit einer ebenen Basisfläche und mindestens einer frei geformten Fläche (22) ausgebildet ist.

13. Prismensystem nach Anspruch 9 oder 12, **dadurch gekennzeichnet, dass** dem optisch abbildenden System in der Bildebene als Teil des optisch abbildenden Systems eine LED, ein Bildaufnahmechip, ein Display oder eine Photodiode nachgeschaltet sind.

14. Prismensystem nach Anspruch 13, **dadurch gekennzeichnet, dass** die LED oder der Bildaufnahmechip mit dem optisch abbildenden System (17) verkittet sind.

15. Prismensystem nach Anspruch 3, **dadurch gekennzeichnet, dass** das Umlenksystem auf den Strahlenteiler (11') aufgekittet ist.

16. Prismensystem nach Anspruch 3, **dadurch gekennzeichnet, dass** das Umlenksystem unter einem Keilwinkel gegenüber dem Strahlenteiler (11') beabstandet angeordnet ist.

17. Prismensystem nach Anspruch 4, **dadurch gekennzeichnet, dass** das Dreieckprisma (13) so in den offenen Bereich eingefügt ist, dass eine der Dachflächen (15) die Strahleneintrittsfläche, die andere Dachfläche (16) eine Reflexionsfläche und die Basisfläche (14) die Strahlenaustrittsfläche ist.

18. Prismensystem nach Anspruch 3, **dadurch gekennzeichnet, dass** das Umlenksystem aus einer GRIN-Linse oder einem diffraktivem Element DEO (21) besteht.

## Claims

1. Parallel-vision, image-inverting prism system (1) comprising two mutually parallel base faces (4; 9) for a perpendicular beam passage, wherein one of these base faces (4; 9) can be assigned to an eyepiece-side imaging beam path and the other one of these base faces can be assigned to an objective lens-side imaging beam path of a telescope, and wherein the prism system (1) consists of two reflection prisms (3; 7) with respectively one gable face (6) angled in relation to the base face (4; 9), one of these reflection prisms (3) having a roof edge (5) likewise angled in relation to the base face (9) and the reflection prisms (3; 7) being assembled at the planar gable faces (6) in such a way that the roof edge (5) and the region of the gable face (6), lying outside of the joining region, of the other reflection prism (7) forms a triangular open space, **characterized in that** the planar reflection face (11) of one of the reflection prisms (3, 7) situated in the open space is embodied over the whole area thereof as a broadband, partly transmissive beam splitter (11').

2. Prism system according to Claim 1, **characterized in that** the beam splitter (11') is embodied for coupling or decoupling of a part of the imaging beam path (10) in a telescope and/or of an additional further beam path (12).

3. Prism system according to one of the preceding claims, **characterized in that**, as part of the prism system, a deflection system for deflecting the beam passing through the beam splitter (11') out of the prism system (1) or into the latter is inserted into the open space between roof edge (5) and face of the beam splitter (11').

4. Prism system according to Claim 3, **characterized in that** the deflection system is embodied as a triangular prism (13) with a base face (14) and, adjoining the latter at an acute angle, first and second roof faces (15, 16).

5. Prism system according to Claim 4, **characterized in that** the base face (14) of the triangular prism (13) is arranged parallel and at a distance to the beam splitter (11').

6. Prism system according to Claim 4 or 5, **characterized in that** the first roof face (15), adjacent to the roof edge (5) in the open space, of the triangular prism (13) is mirrored.

7. Prism system according to Claim 6, **characterized in that** the inclination of the mirrored first roof face (15) in relation to the base face (14) is selected in such a way that the rays passing through the base face (14) and reflected at the roof face (15) are incident on the base face (14) at the critical angle for total internal reflection.

8. Prism system according to Claim 7, **characterized in that** the inclination of the second roof face (16) of the triangular prism (13) in relation to the base face (14) is selected in such a way that the optical axis of a beam undergoing total internal reflection at the base face (14) passes perpendicularly through said second roof face (16).

9. Prism system according to Claim 8, **characterized in that** an optical system (17), as part of the prism system, imaging the emerging beams is arranged downstream of the second roof face (16).

10. Prism system according to Claim 9, **characterized in that** the optical system (17) is a lens system and/or consists of GRIN lenses and/or refractive elements (DOEs).

11. Prism system according to Claim 3, **characterized in that** the deflection system consists of free-form mirror faces (23).

12. Prism system according to Claim 3, **characterized in that** the deflection system is embodied as a prism with a planar base face and at least one free-form face (22).

13. Prism system according to Claim 9 or 12, **characterized in that**, as part of the optically imaging system, an LED, an image recording chip, a display or a photodiode are arranged downstream of the optically imaging system in the image plane.

14. Prism system according to Claim 13, **characterized in that** the LED or the image recording chip are cemented to the optically imaging system (17).

15. Prism system according to Claim 3, **characterized in that** the deflection system is cemented onto the beam splitter (11').

16. Prism system according to Claim 3, **characterized in that** the deflection system is arranged at a wedge angle at a distance from the beam splitter (11').

17. Prism system according to Claim 4, **characterized in that** the triangular prism (13) is inserted into the open region in such a way that one of the roof faces (15) is the beam entry face, the other roof face (16) is a reflection face and the base face (14) is the beam emergence face.

18. Prism system according to Claim 3, **characterized in that** the deflection system consists of a GRIN lens or a refractive element DEO (21).

## Revendications

1. Système de prisme à vision parallèle renversant l'image (1) comportant deux surfaces de base parallèles l'une à l'autre (4 ; 9) permettant un passage vertical des rayons perpendiculaire, dans lequel l'une desdites surfaces de base (4 ; 9) peut être associée à un chemin de faisceau de formation d'image situé du côté de l'oculaire et l'autre desdites surfaces de base peut être associée à un chemin de faisceau de formation d'image du côté de l'objectif d'un télescope, et dans lequel le système de prisme (1) est constitué de deux prismes de réflexion (3 ; 7) comportant respectivement une surface frontale (6) positionnée en biais par rapport à la surface de base (4 ; 9), l'un desdits prismes de réflexion (3) présente une arête de toit (5) également inclinée par rapport à la surface de base (9) et les prismes de réflexion (3 ; 7) sont joints aux surfaces frontales planes (6) de manière à ce que l'arête de toit (5) et la région de la surface frontale (6) se situant à l'extérieur de la région de jonction des autres prismes de réflexion (7) forment un espace ouvert triangulaire, **caractérisé en ce que** la surface de réflexion plane (11) se situant dans l'espace ouvert de l'un des prismes de réflexion (3, 7) est entièrement réalisée sous la forme d'un diviseur de faisceau (11') semi-transparent à large bande.

2. Système de prisme selon la revendication 1, **caractérisé en ce que** le diviseur de faisceau (11') est réalisé afin de coupler en entrée ou en sortie une partie du chemin de faisceau de formation d'image (10) dans un télescope et/ou un autre chemin de faisceau (12) supplémentaire.

3. Système de prisme selon l'une quelconque des revendications précédentes, **caractérisé en ce qu'**un système de déviation est inséré dans l'espace ouvert entre l'arête de toit (5) et la surface du diviseur de faisceau (11') en tant que partie du système de prisme afin de dévier les rayons traversant le diviseur de faisceau (11') émanant du système de prisme (1) ou y pénétrant.

4. Système de prisme selon la revendication 3, **caractérisé en ce que** le système de déviation est réalisé sous la forme d'un prisme triangulaire (13) ayant une surface de base (14) et des première et second surfaces de toit (15, 16) adjacentes à celle-ci sous un angle aigu.

5. Système de prisme selon la revendication 4, **caractérisé en ce que** la surface de base (14) du prisme triangulaire (13) est disposée parallèlement et de manière espacée par rapport au diviseur de faisceau (11').

6. Système de prisme selon la revendication 4 ou 5, **caractérisé en ce que** l'arête de toit (5) est métallisée dans l'espace ouvert au voisinage de la première surface de toit (15) du prisme triangulaire (13).

7. Système de prisme selon la revendication 6, **caractérisé en ce que** l'inclinaison de la première surface de toit métallisée (15) par rapport à la surface de base (14) est choisie de manière à ce que les rayons traversant la surface de base (14) et réfléchis sur la surface de toit (15) soient incidents sur la surface de base (14) sous l'angle limite de réflexion totale.

8. Système de prisme selon la revendication 7, **caractérisé en ce que** l'inclinaison de la seconde surface de toit (16) du prisme triangulaire (13) par rapport à la surface de base (14) est choisie de manière à ce que l'axe optique d'un faisceau de rayons soumis à une réflexion totale sur la surface de base (14) pénètre verticalement à travers ladite seconde surface de toit (16).

9. Système de prisme selon la revendication 8, **caractérisé en ce que** la seconde surface de toit (16) est disposée en aval du système optique (17) formant l'image du faisceau de rayons de sortie en tant que partie du système de prisme.

10. Système de prisme selon la revendication 9, **caractérisé en ce que** le système optique (17) est un système de lentilles et/ou est constitué de lentilles GRIN et/ou d'éléments diffractants (DOE).

11. Système de prisme selon la revendication 3, **caractérisé en ce que** le système de déviation est constitué de surfaces de miroir de formes libres (23).

12. Système de prisme selon la revendication 3, **caractérisé en ce que** le système de déviation est réalisé sous la forme d'un prisme comportant une surface de base plane et au moins une surface de forme libre (22).

13. Système de prisme selon la revendication 9 ou 12, **caractérisé en ce qu'**une LED, une puce d'acquisition d'image, un afficheur, une photodiode sont disposés en aval du système optique de formation d'image dans le plan image en tant que partie du système de formation d'image optique.

14. Système de prisme selon la revendication 13, **caractérisé en ce que** la LED ou la puce d'acquisition d'image sont collées au système optique de formation d'image (17).

15. Système de prisme selon la revendication 3, **caractérisé en ce que** le système de déviation est collé au diviseur de faisceau (11').

16. Système de prisme selon la revendication 3, **caractérisé en ce que** le système de déviation est disposé sous un angle de coin de manière espacée par rapport au diviseur de faisceau (11').

17. Système de prisme selon la revendication 4, **caractérisé en ce que** le prisme triangulaire (13) est introduit dans la région ouverte de manière à ce que l'une des surfaces de toit (15) soit la surface d'incidence des rayons, que l'autre surface de toit (16) soit une surface de réflexion et que la surface de base (14) soit la surface de sortie de rayons.

18. Système de prisme selon la revendication 3, **caractérisé en ce que** le système de déviation est constitué d'une lentille GRIN ou d'un élément de diffraction DEO (21).
